# EUROPÄISCHE PATENTSCHRIFT

(11) **EP 3 347 605 B1**
(45) Veröffentlichungstag und Bekanntmachung des Hinweises auf die Patenterteilung: **19.01.2022**
(21) Anmeldenummer: 16767168.4
(22) Anmeldetag: 06.09.2016
(51) Int. Cl.: B05C 9/14, B05C 19/04, F16B 11/00

(54) **VERFAHREN ZUM HERSTELLEN EINES WÄRMEÜBERTRAGERS**
METHOD FOR PRODUCING A HEAT EXCHANGER
PROCÉDÉ DE FABRICATION D'UN ÉCHANGEUR DE CHALEUR

(30) Priorität: 11.09.2015 DE 102015217470
(43) Veröffentlichungstag der Anmeldung: 18.07.2018
(73) Patentinhaber: Mahle International GmbH, 70376 Stuttgart (DE)
(72) Erfinder: SAILER, Carolin, 72119 Ammerbuch (DE); SCHIEHLEN, Thomas, 89174 Altheim (DE); WEINMANN, Dominique, 72108 Rottenburg (DE)
(74) Vertreter: BRP Renaud & Partner mbB Rechtsanwälte Patentanwälte Steuerberater
(86) Internationale Anmeldenummer: PCT/EP2016/070918
(87) Internationale Veröffentlichungsnummer: WO 2017/042143

(56) Entgegenhaltungen:
- DE-A1-102006 002 932
- DE-A1-102013 206 056
- JP-A- S5 891 781

## Beschreibung

Die vorliegende Erfindung betrifft ein Verfahren zum Herstellen eines Wärmeübertragers mit zumindest zwei miteinander verklebten Bauteilen, gemäß dem Oberbegriff des Anspruchs 1.

Bereits seit Jahrzehnten werden Kühlmodule für die Kältemittelanwendung und die Kühlmittelanwendung gefertigt, deren Fertigung gemeinhin mit Werkstoffen erfolgt, die sich für eine Verlötung eignen, beispielsweise Edelstahl, Kupfer oder Aluminium. Diese Werkstoffe sind als Halbzeuge mit Lot beschichtet. Die Lotplattierung der Halbzeuge besteht aus einer Materialschicht, die einen niedrigeren Schmelzpunkt, als das Grundmaterial aufweist. Zur Verlötung werden die Teile verspannt und anschließend im Ofen unter einer Temperatur, die nahe an den Schmelzpunkt des Grundmaterials heranreicht, verlötet. Hierzu sind unter anderem beispielsweise Flussmittel von Nöten, die die außen befindliche Oxidschicht aufbrechen bzw. lösen. Flussmittel besitzen jedoch den Nachteil, dass sie gesundheitsschädlich sind; zudem können Rückstände auf den Bauteilen verbleiben, die sich negativ auf die geforderte Bauteilreinheit auswirken. Die Verlötung kann außerdem sinnvollerweise nur artgleiche Materialien miteinander verbinden, um beispielsweise thermische Längendehnungen aufzunehmen oder diese erst gar nicht entstehen zu lassen. Ebenso sollten aus korrosionstechnischer Sicht keine Potentialunterschiede von variierenden Materialien vorhanden sein. Die Verlötung kann dann erfolgreich verlaufen, wenn verschiedene Randbedingungen,
wie folgt eingehalten werden: Entfetten der Teile (derzeit mit PER), Stapeln und Verspannen der lotplattierten Halbzeuge, Lötung im Ofen bei um die 650 °C für mehrere Stunden, Dichtprüfen der Teile und ggf. Nachlöten, wenn die Teile undicht sein sollten. Dieser Prozess ist jedoch sehr zeit-, kosten- und ressourcenintensiv, was sich negativ auf die CO2-Bilanz auswirkt.

Beim Verbinden von zwei Fügepartnern aus unterschiedlichen Materialien, müssen unterschiedliche Wärmedehnungen berücksichtigt und ausgeglichen werden, was eine Verlötung nur bedingt sicherstellen kann bzw. nur eine gewisse Zeitstandfestigkeit aufweist.

Alternativ zum Verlöten steht rein theoretisch auch ein Verkleben der einzelnen Bauteile des Wärmeübertragers zur Verfügung, wobei dies jedoch bislang an entsprechend prozesssicheren Verfahren scheiterte. Darüber hinaus konnte das prozesssichere, blasenfreie und qualitativ hochwertige Auftragen einer Klebeschicht zudem nicht entsprechend flexibel genug gestaltet werden, um es an unterschiedliche Anforderungen leicht anpassen zu können.

Die DE102013206056A1 und die JPS5891781A zeigen ein Verfahren des Standes der Technik.

Die vorliegende Erfindung beschäftigt sich daher mit dem Problem, für ein Verfahren der gattungsgemäßen Art alternative Ausführungsformen anzugeben, die alle ein prozesssicheres und zugleich wirtschaftliches Auftragen einer Klebstoffschicht auf ein zu verklebendes Bauteil eines Wärmeübertragers ermöglichen.

Dieses Problem wird erfindungsgemäßen durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, unterschiedliche und alternativ anwendbare Verfahren zum Aufbringen einer Klebstoffschicht auf ein zu verklebendes Bauteil eines Wärmeübertragers anzugeben, wobei das mit der Klebstoffschicht zu beschichtenden Bauteil eine Bandware oder ein Rohr sein kann, wobei aus der Bandware im weiteren Verlauf beispielsweise Rohre geformt oder Wellrippen geprägt bzw. gestanzt werden können.

Bei einer vorteilhaften Weiterbildung einer nicht erfindungsgemäßen Lösung sind das zu beschichtende Bauteil des Wärmeübertragers als Bandware und die Klebstoffschicht als Klebstofffolie ausgebildet, wobei zur Herstellung zunächst eine Oberfläche der mit der Klebstoffschicht zu beschichtende Bandware vorteilhafterweise entfettet und/oder gebürstet wird. Anschließend wird die Klebstofffolie erhitzt und auf die zu beschichtende Bandware aufgebracht, wobei die Klebstofffolie und die zu beschichtende Bandware durch Druckrollen geführt und dabei aneinander gepresst werden. Danach wird die so beschichtete Bandware, das heißt das Bauteil gekühlt und aufgerollt. Der Vorteil einer derartigen Beschichtung der Bandware mit einem Klebstofffilm bzw. einer Klebstofffolie ist der Umstand, dass sowohl die Bandware als auch die Klebstofffolie als Rollenware vorhanden sind und dadurch sowohl gut zu verarbeiten als auch gut zu lagern sind. Bei dieser Ausführungsform kann darüber hinaus ein kontinuierlicher Beschichtungsprozess geschaffen werden, der zudem durch die Klebstofffolie eine ungleichmäßige Dicke der aufzubringenden Klebstoffschicht verhindert. Rein theoretisch kann selbstverständlich auch die Bandware erhitzt werden, um die Klebstofffolie aufzubringen.

Bei einer alternativen Weiterbildung eines nicht erfindungsgemäßen Verfahrens sind das zu beschichtende Bauteil als Rohr und die Klebstoffschicht als Klebstofffolie ausgebildet. Bei diesem Verfahren wird ebenfalls vorzugsweise zunächst eine Oberfläche des mit der Klebstoffschicht zu beschichtenden Rohrs entfettet und gebürstet und anschließend die Klebstofffolie und das zu beschichtende Rohr durch Druckrollen geführt und aneinander gepresst. Nun werden die Klebstofffolie und das zu beschichtende Rohr durch einen Ofen geführt und dabei erhitzt, wobei die Klebstofffolie auf das zu beschichtende Rohr aufgeschrumpft wird. Das Aufschrumpfen kann dabei beispielsweise direkt nach der Extrusion des Rohres erfolgen oder aber auf bereits abgelängte Rohre. Ein Erhitzen der Klebstofffolie kann dabei - wie beschrieben - in dem sich an die Druckrollen anschließenden

Ofen erfolgen und/oder durch ein innen beheiztes Rohr, wozu beispielsweise ein Heißfluidstrom durch das Rohr geleitet wird. Auch bei diesem Verfahren kann die Klebstoffschicht als Klebstofffolie und damit leicht verarbeitbar und damit leicht lagerbar in einem einfachen und kontinuierlichen Prozess auf das zu beschichtende Rohr aufgebracht werden. Erfolgt beispielsweise ein Beschichten des frisch extrudierten Rohres, so kann hierbei zum Erhitzen der Klebstoffschicht noch die um Extrudieren des Rohres herrührende Rohrwärme verwendet werden und ein zusätzlicher Reinigungsschritt entfällt.

Bei einer vorteilhaften Weiterbildung der zuvor beschriebenen nicht erfindungsgemäßen Verfahren können auch zumindest zwei Druckrollen vorgesehen sein, wobei beispielsweise zumindest eine der Druckrollen beheizt ist und dadurch das Erhitzen der als Klebstofffolie ausgebildeten Klebstoffschicht bewirkt. Um möglichst blasenfreies Aufbringen der Klebstoffschicht bzw. der Klebstofffolie auf die Bandware bzw. das Rohr zu ermöglichen, kann zumindest eine Druckrolle eine an die Außenkontur des zu beschichtenden Bauteils angepasste Kontur aufweisen, so dass bei der Ausgestaltung des Bauteils als Rohr die zugehörige Rolle beispielsweise eine konvexe, entsprechende Rinne aufweist. Ist das zu beschichtende Bauteil beispielsweise als Bandware ausgebildet, so besitzt in diesem Fall die Druckrolle eine Walzengestalt. Selbstverständlich ist auch denkbar, dass zumindest zwei hintereinander geschaltete Druckrollenpaare vorgesehen sind, wovon jedes ein entsprechendes Andrücken der Klebstofffolie in einem entsprechenden Bereich des Rohres bewirkt. Auch hierdurch lässt sich beispielsweise die Gefahr von Fehlstellen sowie die Gefahr einer ungleichmäßigen Dicke der Klebstoffschicht erheblich reduzieren. Die Gefahr von Fehlstellen durch beispielsweise Maßabweichungen der Rohre kann darüber hinaus durch eine Federwirkung an den Druckrollen minimiert werden. Hierdurch ist auch ein vergleichsweise flexibler Herstellungsprozess möglich, da die federnden Druckrollen die Bearbeitung bzw.

Beschichtung unterschiedlicher Rohrgeometrien mit einer entsprechenden, zugehörigen Klebstoffschicht ermöglichen.

Bei einer weiteren vorteilhaften und alternativen Ausgestaltung des nicht erfindungsgemäßen Verfahrens sind das zu beschichtende Bauteil als Bandware und die Klebstoffschicht als zunächst flüssiger Kleber ausgebildet, wobei in diesem Fall vorteilhafterweise ebenfalls zunächst eine Oberfläche der mit der Klebstoffschicht zu beschichtenden Bandware entfettet und gebürstet und dadurch gereinigt und vorbereitet wird. Anschließend wird der zunächst flüssige Kleber über eine Auftragsrolle auf die zu beschichtende Bandware aufgetragen und die mit der aufgerollten Klebeschicht beschichtete Bandware anschließend gekühlt. In diesem Fall kann beispielsweise der zu bearbeitende Klebstoff als Granulat angeliefert und aufgeschmolzen und dann direkt verarbeitet werden. Bei diesem Verfahren lässt sich die Gefahr von Fehlstellen durch Maßabweichungen der Rohre reduzieren, insbesondere sofern beispielsweise die Auftragsrolle federnd gelagert ist.

Bei einer ersten Ausführungsform des erfindungsgemäßen Verfahrens sind das zu beschichtende Bauteil als Bandware und die Klebstoffschicht zunächst als Granulat ausgebildet, wobei auch bei diesem alternativen Verfahren zum Aufbringen der Klebstoffschicht eine Oberfläche der mit der Klebstoffschicht zu beschichtende Bandware vorteilhafterweise zunächst entfettet und gebürstet wird. Anschließend wird die zu beschichtende Bandware erhitzt und das Granulat aufgestreut, wobei es zur Klebstoffschicht schmilzt. Die Bandware mit der darauf aufgebrachten Klebstoffschicht wird nun durch Druckrollen geführt und dabei die Klebstoffschicht vergleichmäßigt und zugleich mit der Bandware verbunden. Anschließend kann die beschichtete Bandware aufgerollt und für einen weiteren Verarbeitungsschritt, beispielsweise für das Formen von Rohren oder das Ausformen bzw. Ausstanzen von Wellrippen vorbereitet bzw. gelagert werden.

Bei einer zweiten alternativen Ausführungsform des erfindungsgemäßen Verfahrens sind das zu beschichtende Bauteil als Rohr und die Klebstoffschicht zunächst als Granulat ausgebildet. Sinnigerweise wird nach einem Entfetten bzw. Bürsten der Oberfläche des Rohres nun das zu beschichtende Rohr erhitzt und das Klebstoffgranulat auf das zu beschichtende Rohr aufgestreut. Das Rohr mit der darauf aufgebrachten Klebstoffschicht wird nun durch Druckrollen geführt und dabei die Klebstoffschicht vergleichmäßig und mit dem Rohr verbunden, woraufhin das beschichtete Rohr abgekühlt wird. Auch hierdurch ist ein einerseits äußerst prozesssicheres Auftragen der Klebstoffschicht bei andererseits höchst möglicher Flexibilität möglich.

Bei einer vorteilhaften Weiterbildung sämtlicher Alternativen des erfindungsgemäßen Verfahrens erfolgt nach dem Aufbringen der Klebstoffschicht eine optische Kontrolle. Bei einer derartigen optischen Kontrolle, die beispielsweise automatisiert mit einer entsprechenden Erkennungssoftware ausgeführt werden kann, können Fehlstellen während des Fertigungsprozesses erkannt und beispielsweise in einem nachfolgenden Bearbeitungsschritt noch behoben werden. Zudem können durch eine derartige optische Kontrolle höchste Qualitätsansprüche gewährleistet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein nicht erfindungsgemäßes Verfahren zum Aufbringen einer als Klebstofffolie ausgebildeten Klebstoffschicht auf einem Bandmaterial,
- Fig. 2: eine nicht erfindungsgemässe Darstellung wie in Fig. 1, jedoch bei einem als Rohr ausgebildeten Bauteil,
- Fig. 3: eine alternative nicht erfindungsgemässe Ausführungsform des erfindungsgemäßen Verfahrens zur Fig. 2,
- Fig. 4: ein nicht erfindungsgemässes Aufbringen von flüssigem Klebstoff als Klebeschicht auf als Bandware ausgebildetes Bauteil eines Wärmeübertragers,
- Fig. 5: eine nicht erfindungsgemässe Darstellung wie in Fig. 4, jedoch mit einer Extrusionseinheit,
- Fig. 6: ein nicht erfindungsgemässes Aufsprühen einer Klebstoffschicht auf ein als Rohr ausgebildetes Bauteil mit flüssigem Klebstoff,
- Fig. 7: eine nicht erfindungsgemässe Darstellung wie in Fig. 6, jedoch mit einer anderen Auftragseinrichtung,
- Fig. 8: ein Aufbringen von als Granulat ausgebildetem Klebstoff als Klebeschicht auf ein als Bandware ausgebildetes Bauteil,
- Fig. 9: eine Darstellung wie in Fig. 8, jedoch bei einem als heißem Rohr ausgebildetem Bauteil.

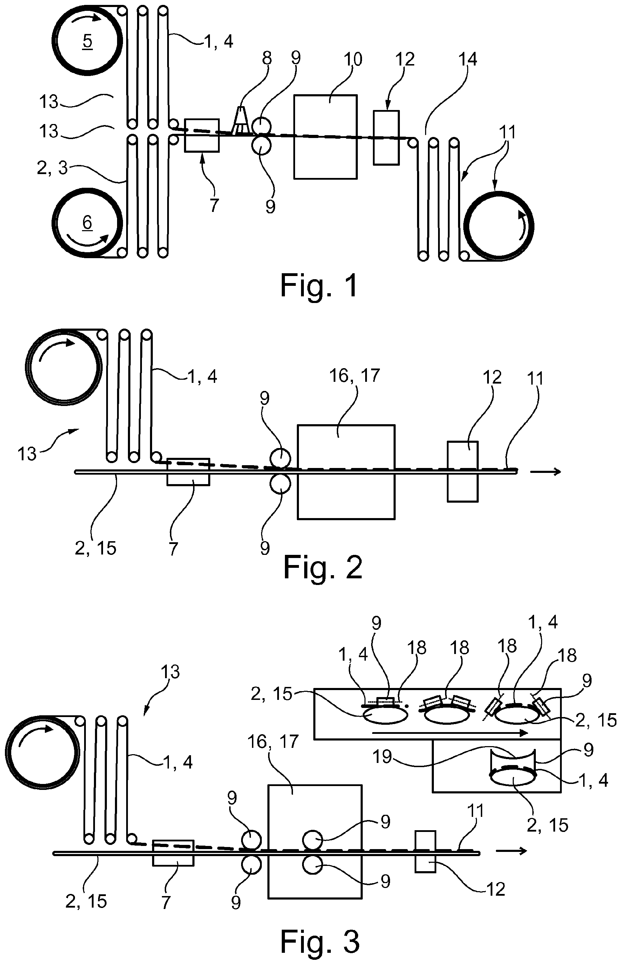

Entsprechend den Fig. 1 bis 9 wird jeweils ein alternatives Verfahren zum Aufbringen einer Klebstoffschicht 1 auf ein zu beschichtendes Bauteil 2 eines nicht gezeigten Wärmeübertragers dargestellt, wobei unabhängig von den einzelnen Verfahrensschritten der alternativen Verfahren die Klebstoffschicht 1 jeweils auf eine Außenseite des Bauteils 2 aufgebracht wird.

Betrachtet man das gemäß der Fig. 1 dargestellte Verfahren, so sind das zu beschichtende Bauteil 2 als Bandware 3 und die Klebstoffschicht 1 als Klebstofffolie 4 ausgebildet. Sowohl die Klebstofffolie 4 als auch das als Bandware 3 ausgebildete Bauteil 2 sind dabei aufgerollt, nämlich einmal auf einer Klebstofffolienrolle 5 und einmal auf einer Bandwarenrolle 6. In einem ersten Verfahrensschritt wird nun eine Oberfläche der mit der Klebstoffschicht 1 zu beschichtenden Bandware 3 entfettet und gebürstet, was in einer Reinigungseinrichtung 7 erfolgt. Das Entfetten und Bürsten kann dabei beispielsweise mittels Plasma, Corona oder ähnlichem erfolgen. Anschließend wird die Klebstofffolie 4 mittels einer Heizeinrichtung 8 erhitzt, wobei die Heizeinrichtung 8 beispielsweise als Infrarotstrahler oder als elektrische Heizeinrichtung ausgebildet sein kann. Ist die Klebstofffolie 4 erhitzt, wird diese zusammen mit der zu beschichtenden Bandware 3 durch Druckrollen 9 geführt und dabei aneinander gepresst. Anschließend kann die beschichtete Bandware 3, das heißt das fertig beschichtete Bauteil, in einer Kühleinrichtung 10 definiert abgekühlt werden, wodurch ein schnelleres Aufrollen des beschichteten Bauteils 11 ermöglicht wird. Vor dem Aufrollen des fertig beschichteten Bauteils 11 durchfährt dies üblicherweise durch eine optische Kontrolleinrichtung 12, in welcher Verfärbungen, Blasen etc. mittels eines optischen Sensors erkannt werden. Vor der Reinigungseinrichtung 7 und nach der optischen Kontrolleinrichtung 12 sind jeweils ein Puffer, nämlich ein Anfangspuffer 13 sowie ein Endpuffer 14 angeordnet. Die Bandware 3 kann beispielsweise ein Aluminiumblech sein, durch die Bandware 3 nicht nur gut lagerfähig, sondern auch einfach zu verarbeiten ist. Mit dem Verfahren lässt sich somit die Klebstoffschicht 1, über welche anschließend mehrere beschichtete Bauteile 11 miteinander und zu einem Wärmeübertrager verklebt werden, prozesssicher, kontinuierlich, qualitativ hochwertig und zugleich kostengünstig aufbringen. Darüber hinaus kann mit dem Verfahren die Gefahr einer ungleichmäßigen Dicke der Klebstoffschicht 1 zumindest reduziert, vorzugsweise sogar vermieden werden.

Betrachtet man die Fig. 2, so kann dort ein Verfahren erkennen, bei welchem das zu beschichtende Bauteil 2 als Rohr 15 und die Klebstoffschicht 1 ebenso wie gemäß der Fig. 1 als Klebstofffolie 4 ausgebildet sind. Auch bei diesem Verfahren wird vorzugsweise zunächst eine Oberfläche des mit der Klebstoffschicht 1 zu beschichtenden Rohres 15 entfettet und gebürstet und zwar in der Reinigungsstation 7. Anschließend werden die Klebstofffolie 4 und das zu beschichtende Rohr 15 durch Druckrollen 9 aneinander gepresst, wobei in der darauffolgende Heizeinrichtung 16, beispielsweise einem Ofen 17, die Klebstofffolie 4 und das zu beschichtende Rohr 15 erhitzt werden und dabei die Klebstofffolie 4 auf das zu beschichtende Rohr 15 aufgeschrumpft wird. Nach dem Ausfahren aus der Heizeinrichtung 16 bzw. dem Ofen 17 durchläuft das beschichtete Bauteil 11 wiederum eine optische Kontrolleinrichtung 12 zur Qualitätssicherung. Rein theoretisch ist dabei auch denkbar, dass das zu beschichtende Rohr 15 nicht nur von außen durch die Heizeinrichtung 16 bzw. den Ofen 17, sondern auch von innen, beispielsweise durch einen durch das Rohrinnere durchgeleiteten Heißluftstrom, beheizt wird.

Wird das Bauteil 2, das heißt das Rohr 15, beispielsweise durch Extrusion hergestellt, so kann auch die hierbei auftretende Hitze des Rohres 15 zum Aufschrumpfen der Klebstoffschicht 1 bzw. der Klebstofffolie 4 benutzt werden. Die Klebstofffolie 4 ist dabei ebenfalls auf einer Klebstofffolienrolle 5 aufgerollt und dadurch einfach zu Handhaben und einfach zu lagern. Betrachtet man das Verfahren gemäß der Fig. 3, so unterscheidet sich dieses zum gemäß der Fig. 2 dargestellten Verfahren dadurch, dass mehrere hintereinander angeordnete Druckrollen 9 bzw. Druckrollenpaare vorgesehen sind, deren Achsen 8 derart ausgebildet bzw. ausgerichtet sind, dass diese ein blasenfreies Andrücken und Anschmiegen der Klebstofffolie 4 an die Außenkontur des zu beschichtenden Rohres 15 ermöglichen. Alternativ hierzu ist auch denkbar, dass zumindest eine Druckrolle 9 eine an die Außenkontur des zu beschichtenden Bauteils 2, in diesem Fall des zu beschichtenden Rohrs 15 angepasste Kontur 19 aufweist und dadurch ebenfalls einen blasenfreien und zuverlässigen Auftrag der Klebstofffolie 4 auf das zu beschichtende Rohr 15 ermöglicht. Eine dieser Druckrollen 9 kann dabei darüber hinaus beheizbar sein, wodurch ein nochmals verbesserter Auftrag und Befestigungsprozess erzielbar ist. Durch derart ausgebildete bzw. ausgerichtete Druckrollen 9 lässt sich die Gefahr von Fehlstellen erheblich reduzieren und dadurch die Herstellungsqualität erheblich steigern. Darüber hinaus ist durch ein einfaches Austauschen der Druckrollen 9 bzw. eine federnde Lagerung unterschiedlicher Druckrollenpaare auch eine Bearbeitung von Rohren 15 mit unterschiedlichen Durchmessern bzw. Rohrgeometrien denkbar.

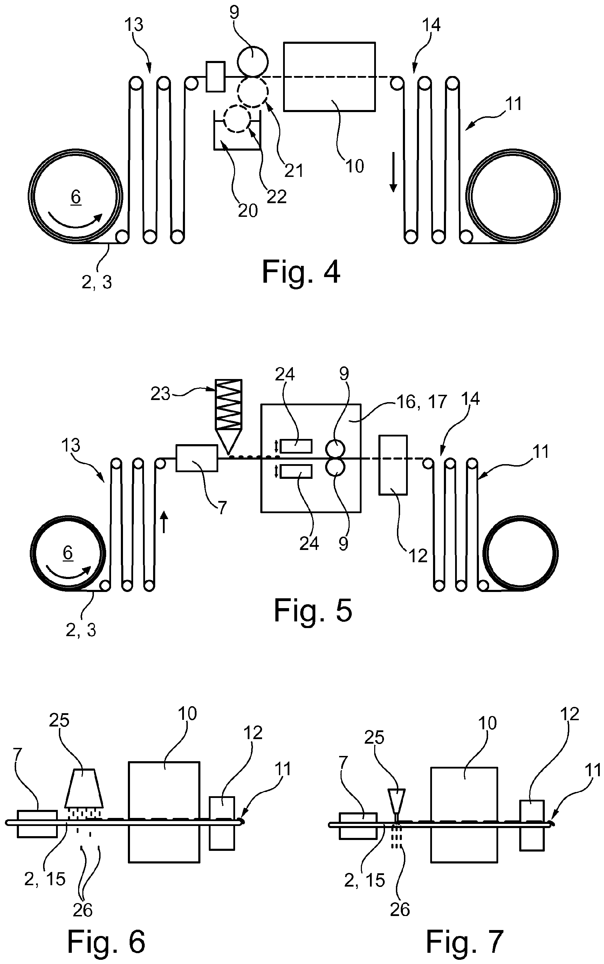

Bei dem gemäß der Fig. 4 dargestellten Verfahren sind das zu beschichtende Bauteil 2 als Bandware 3 und die Klebstoffschicht als zunächst flüssiger Kleber 20 ausgebildet. Eine Oberfläche der mit der Klebstoffschicht 1 zu beschichtenden Bandware 3 wird dabei vorzugsweise wiederum in der Reinigungsstation 7 zunächst entfettet und gebürstet, woraufhin anschließend der noch flüssige Kleber 20 über eine Auftragsrolle 21 auf die zu beschichtende Bandware 3 aufgetragen wird. Ein Übertrag des flüssigen Klebstoffs 20 an die Auftragsrolle 21 erfolgt beispielsweise über eine Transportrolle 22. Ist die Klebstoffschicht 1 bzw. der flüssige Kleber 20 mit der Auftragsrolle 21 auf die zuvor entfettete und gebürstete Oberfläche der zu beschichtenden Bandware 3 aufgetragen, durchläuft das nunmehr beschichtete Bauteil 11 wiederum eine Kühleinrichtung 10, in welcher die Klebstoffschicht 1 fest auf der Bandware 3 fixiert wird. Der Vorteil eines derartigen flüssigen Klebstoffes 20 liegt insbesondere darin, dass dieser zunächst als Granulat angeliefert und bedarfsgerecht aufgeschmolzen werden kann. Auch hierdurch ist ein kontinuierlicher Auftragsprozess möglich.

Bei den gemäß der Fig. 5 dargestellten Verfahren erfolgt der Auftrag des flüssigen Klebstoffs 20 mittels einer Extrusionseinheit 23, kontinuierlich oder wie dargestellt punktuell, wobei in der Klebstoffschicht 1 und das als Bandware 3 ausgebildete Bauteil 2 anschließend erhitzt und durch Druckrollen 9 oder Druckplatten 24 miteinander verbunden werden. Die nunmehr beschichtete Bandware 3, das heißt das fertig beschichtete Bauteil 11 wird nun ebenfalls wieder aufgerollt. Mittels der Druckrollen 9 bzw. der Druckplatten 24 kann eine besonders gleichmäßige Verteilung der Klebstoffschicht 1 auf der Bandware 3 erreicht werden.

Betrachtet man die Verfahren gemäß den Fig. 6 und 7, so unterscheiden sich diese lediglich durch unterschiedliche Aufbringeinrichtung 25, mittels welchen der flüssige Klebstoff 20 beispielsweise punktuell oder als kontinuierlicher Klebstoffstrahl auf das zu beschichtende Rohr 15 aufgebracht werden kann. Nach dem Beschichten durchläuft das beschichtete Rohr 15 wieder eine Kühleinrichtung 10, sowie eine optische Kontrolleinrichtung 12, wobei in der Kühleinrichtung 10 die Klebstoffschicht 1 auf dem Rohr 15 fixiert und in der Kontrolleinrichtung 12 die Qualität des Auftragsprozesses überprüft werden.

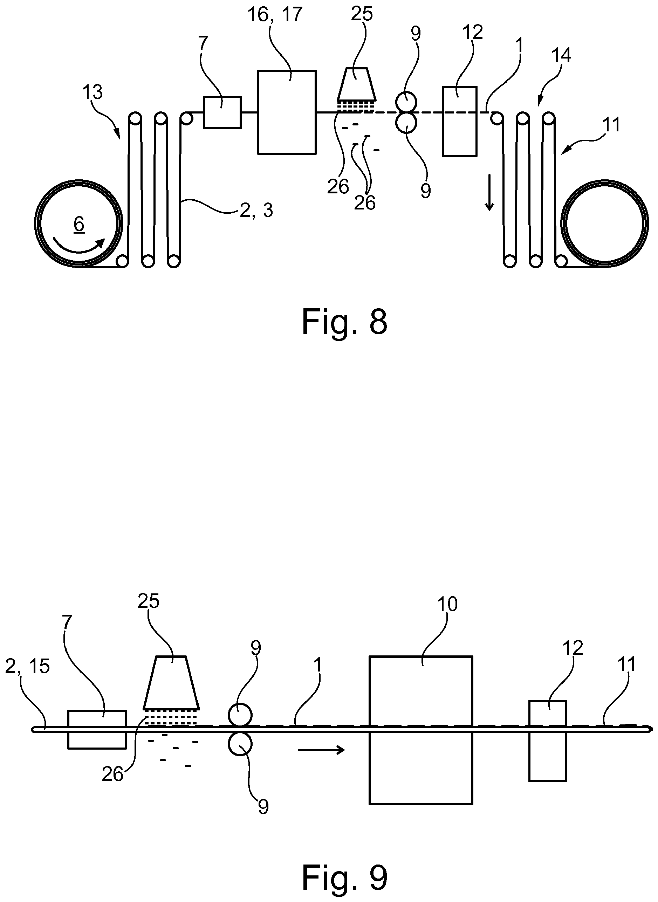

Betrachtet man nun noch die Alternativen des erfindungsgemäßen Verfahrens gemäß den Fig. 8 und 9, so kann man dort erkennen, dass gemäß der Fig. 8 das zu beschichtende Bauteil 2 als Bandware 3 und gemäß der Fig. 9 das Rohr 15 ausgebildet sind. Die Klebstoffschicht 1 ist zunächst als Klebstoffgranulat 26 bzw. generell als Granulat 26 ausgebildet. Bei beiden Verfahren wird vorzugsweise zunächst wiederum die Oberfläche des zu beschichtenden Bauteils 2, das heißt der zu beschichtenden Bandware 3 bzw. des zu beschichtenden Rohres 15 in der Reinigungseinrichtung 7 entfettet und gebürstet. Bezüglich des weiteren Vorgehens unterscheiden sich jedoch die beiden Verfahren.

Gemäß der Fig. 8 wird die zu beschichtende Bandware 3 nun erhitzt und anschließend das Granulat 26 aufgestreut, wodurch es zur Klebstoffschicht 1 schmilzt und die zu beschichtende Oberfläche des Bandmaterials 3 belegt. Anschließend wird die beschichtete Bandware 3 mit der aufgebrachten Klebstoffschicht 1 durch Druckrollen 9 geführt und dabei die Klebstoffschicht 1 vergleichmäßigt und zusätzlich mit der Bandware 3 verbunden. Demgegenüber wird bei dem Verfahren gemäß der Fig. 9 das zu beschichtende Rohr 15 erhitzt und das Klebstoffgranulat 26 auf das heiße Rohr 15 aufgestreut. Die nachfolgenden Druckrollen 9 bewirken auch hier eine Vergleichmäßigung und eine bessere Verbindung der Klebstoffschicht 1 mit dem Rohr 15. Anschließend wird das beschichtete Bauteil 11, das heißt das mit der Klebstoffschicht 1 überzogene Rohr 15 in der Kühleinrichtung 10 gekühlt und in der optischen Kontrolleinrichtung 12 auf eventuelle Fehlstellen, Blasenbildungen, etc. kontrolliert.

Sämtlichen gezeigten Alternativen des erfindungsgemäßen Verfahrens ist dabei gemein, dass das Aufbringen der Klebstoffschicht 1 auf das Bauteil 2 prozesssicher, kontinuierlich, ressourcenschonend und zudem kostengünstig möglich ist und zugleich ein sehr hoher Qualitätsstandard bezüglich der Auftragungsqualität erreicht werden kann. Aus dem beschichteten Bauteil 11 können beispielsweise Wellrippen oder andere Bestandteile eines Wärmeübertragers ausgeformt bzw. ausgestanzt werden. Ebenso ist der Einbau der beschichteten Rohre 15 in einem solchen Wärmeübertrager möglich.

## Patentansprüche

1. Verfahren zum Herstellen eines Wärmeübertragers mit zumindest zwei miteinander verklebten Bauteilen (2,11), wobei auf einer Außenseite zumindest eines der Bauteile (2,11) eine Klebstoffschicht (1) aufgebracht wird, **dadurch gekennzeichnet, dass** entweder
- das zu beschichtende Bauteil (2) als Bandware (3) und die Klebstoffschicht (1) zunächst als (Klebstoff-)Granulat (26) ausgebildet sind,
- die zu beschichtende Bandware (3) erhitzt und anschließend das Granulat (26) aufgestreut wird und dabei zur Klebstoffschicht (1) schmilzt,
- die Bandware (3) mit der darauf aufgebrachten Klebstoffschicht (1) durch Druckrollen (9) geführt und dabei die Klebstoffschicht (1) vergleichmäßigt und mit der Bandware (3) verbunden wird,
- die beschichtete Bandware (3) aufgerollt wird,
oder dass
- das zu beschichtende Bauteil (2) als Rohr (15) und die Klebstoffschicht (1) zunächst als (Klebstoff-)Granulat (26) ausgebildet sind,
- das zu beschichtende Rohr (15) erhitzt wird,
- das Granulat (26) auf das zu beschichtende Rohr (15) aufgestreut wird,
- das Rohr (15) mit der darauf aufgebrachten Klebstoffschicht (1) durch Druckrollen (9) geführt und dabei die Klebstoffschicht (1) vergleichmäßigt und mit dem Rohr (15) verbunden wird,
- das beschichtete Rohr (15) gekühlt wird.

2. Verfahren nach Anspruch 1,
**dadurch gekennzeichnet,**
**dass** nach dem Aufbringen der Klebstoffschicht (1) eine optische Kontrolle erfolgt.

## Claims

1. Method for producing a heat exchanger having at least two components (2, 11) bonded to one another, wherein an adhesive layer (1) is applied to an outer side of at least one of the components (2, 11),
**characterised in that** either
- the component (2) to be coated is in the form of a strip material (3) and the adhesive layer (1) is initially in the form of (adhesive) granules (26),
- the strip material (3) to be coated is heated and then the granules (26) are spread on and melted to form the adhesive layer (1),
- the strip material (3) with the adhesive layer (1) applied thereon is guided through pressure rollers (9) and the adhesive layer (1) is evened out and bonded to the strip material (3),
- the coated strip material (3) is rolled up,
or that
- the component (2) to be coated is in the form of a pipe (15) and the adhesive layer (1) is initially in the form of (adhesive) granules (26),
- the pipe (15) to be coated is heated,
- the granules (26) are spread onto the pipe (15) to be coated,
- the pipe (15) with the adhesive layer (1) applied thereon is guided through pressure rollers (9) and the adhesive layer (1) is evened out and bonded to the pipe (15),
- the coated pipe (15) is cooled.

2. Method according to claim 1,
**characterised in that**,
a visual check is carried out after the application of the adhesive layer (1).

## Revendications

1. Procédé de fabrication d'un échangeur de chaleur avec au moins deux composants (2, 11) collés l'un à l'autre, dans lequel sur un côté extérieur d'au moins un des composants (2, 11) une couche de colle (1) est appliquée, **caractérisé en ce que**
- le composant (2) à revêtir est réalisé comme ruban (3) et la couche de colle (1) est réalisée tout d'abord comme granulat (de colle) (26),
- le ruban (3) à revêtir est chauffé et ensuite le granulat (26) est dispersé et fondu pour former la couche de colle (1),
- le ruban (3) est guidé avec la couche de colle (1) appliquée dessus par des galets de pression (9) et la couche de colle (1) est uniformisée et est reliée au ruban (3),
- le ruban (3) revêtu est enroulé,
ou **en ce que**
- le composant (2) à revêtir est réalisé comme tube (15) et la couche de colle (1) est réalisée tout d'abord comme granulat (de colle) (26),
- le tube (15) à revêtir est chauffé,
- le granulat (26) est dispersé sur le tube (15) à revêtir,
- le tube (15) est guidé avec la couche de colle (1) appliquée dessus par des galets de pression (9) et la couche de colle (1) est uniformisée et est reliée au tube (15),
- le tube (15) revêtu est refroidi.

2. Procédé selon la revendication 1,
**caractérisé en ce**
**qu'**après l'application de la couche de colle (1) un contrôle optique est effectué.
